# EUROPÄISCHE PATENTANMELDUNG

(11) **EP 4 674 739 A1**
(43) Veröffentlichungstag der Anmeldung: **07.01.2026**
(21) Anmeldenummer: 25173124.6
(22) Anmeldetag: 29.04.2025
(51) Int. Cl.: B62J 6/045, B62J 6/165, B62J 15/00, B62K 19/40, B62H 5/20

(54) **RÜCKLICHT UND DIEBSTAHLWARNSYSTEM**

(30) Priorität: 01.07.2024 DE 102024002127
(71) Anmelder: Supernova Design GmbH, 79194 Gundelfingen (DE)
(72) Erfinder: Wallmeyer, Marcus, 79261 Gutach (DE)
(74) Vertreter: Stadler, Franz

(57) **Zusammenfassung**

Diebstahlwarnsystem (34) für ein Fahrrad (1) oder E-Bike (1) oder E-Scooter, umfassend als Komponenten eine Batterie (35), eine Positionseinheit (36) zur satellitengestützten Bestimmung der Position, eine Funkverbindungseinheit (38) zur Übersendung und/oder zum Empfang von Daten mit einer Funkverbindung, eine Antenne (24) für die Positionseinheit (38) und/oder die Funkverbindungseinheit (38), wenigstens ein Bauteil (10, 11, 12) mit einem Gehäuse (21), wobei das wenigstens eine Bauteil (10, 11, 12) des Diebstahlwarnsystems (34) mit dem Gehäuse (21) wenigstens ein Formschlusselement (27), insbesondere mehrere Formschlusselemente (27), umfasst zur formschlüssigen und/oder kraftschlüssigen Fixierung des wenigstens einen Bauteils (10, 11, 12) an einem Schutzblech (9) des Fahrrades (1) oder E-Bikes (1) oder E-Scooters.

## Beschreibung

Die vorliegende Erfindung betrifft ein Rücklicht und/oder Reflektor für ein Fahrrad oder E-Bike oder E-Scooter gemäß dem Oberbegriff des Anspruches 1, ein Diebstahlwarnsystem gemäß dem Oberbegriff des Anspruches 6, ein Fahrrad oder E-Bike oder E-Scooter gemäß dem Oberbegriff des Anspruches 10 und ein Verfahren zur Diebstahlüberwachung eines Fahrrades oder E-Bikes oder E-Scooter gemäß dem Oberbegriff des Anspruches 14.

Diebstahlwarnsystem für E-Bikes sind elektrisch und mechanisch mit der Traktionsbatterie und/oder dem Traktionselektromotor verbunden. Das Diebstahlwarnsystem ist somit auf einen besonderen Antriebsstrang angepasst und kann nur für einen speziellen Typ von E-Bike eingesetzt werden. In nachteiliger Weise funktioniert außerdem bei einer Entladung der Traktionsbatterie das Diebstahlwarnsystem nicht.

Die EP 1 659 053 B1 zeigt einen Reflektor, aufweisend: einen Körper; und eine Vielzahl von reflektierenden Reflektorstrukturen, die entlang einer vorderseitigen Oberfläche des Körpers vorgesehen ist, wobei die vorderseitige Oberfläche eine gekrümmte Form hat, die entlang eines Längsschnitts des Körpers gebogen ist, und jede der Vielzahl von reflektierenden Reflektorstrukturen jeweils eine optische Achse hat, wobei die Richtungen der optischen Achsen der Vielzahl von reflektierenden Reflektorstrukturen entlang der gesamten Längsrichtung des Körpers konstant sind.

Die DE 20 2018 004 741 U1 zeigt einen Retroreflektor.

Die CN 103963878 B offenbart ein Diebstahlwarnsystem mit Energiemodul, einem GSM/GPRS-Modul und einem GPS-Modul.

Die CN 104986248 A zeigt ein Diebstahlwarnsystem für ein Fahrrad.

Die Aufgabe der vorliegenden Erfindung besteht deshalb darin, ein Rücklicht und/oder einen Reflektor für ein Fahrrad oder E-Bike oder E-Scooter, ein Diebstahlwarnsystem, ein Fahrrad oder E-Bike oder E-Scooter und ein Verfahren zur Diebstahlüberwachung eines Fahrrades oder E-Bikes oder E-Scooter zur Verfügung zu stellen bei dem das Diebstahlwarnsystem einfach in jedes Fahrrad oder E-Bike oder E-Scooter eingebaut werden kann und im Wesentlichen keine optische Sichtbarkeit für den Nutzer aufweist.

Diese Aufgabe wird gelöst mit einem Rücklicht und/oder Reflektor für ein Fahrrad oder E-Bike oder E-Scooter, umfassend ein Gehäuse, eine vorderseitige Oberfläche, eine rückseitige Oberfläche, wenigstens eine Lichtquelle für die Ausbildung als Rücklicht und/oder wenigstens ein lichtdurchlässig zu der vorderseitigen Oberfläche angeordnete Reflektorelement, insbesondere Retroreflektorelement, zur Reflexion, insbesondere Retroreflexion, des auf die vorderseitige Oberfläche einstrahlenden Lichts für die Ausbildung als Reflektor, wobei das Rücklicht und/oder der Reflektor eine Antenne umfasst. Insbesondere ist der Reflektor ein Retroreflektor.

In einer weiteren Ausführungsform ist die Antenne an der vorderseitigen Oberfläche wenigstens teilweise, insbesondere vollständig, ausgebildet, so dass die vorderseitige Oberfläche wenigstens teilweise von der Antenne gebildet ist. Die Antenne ist somit an der Oberfläche des Rücklichtes und/oder des Reflektors sichtbar.

In einer zusätzlichen Variante ist die Antenne in das Rücklicht und/oder den Reflektor integriert und die Antenne ist wenigstens teilweise, insbesondere vollständig, außerhalb der außenseitigen Oberfläche ausgebildet. Die Antenne ist somit insbesondere an der Oberfläche des Rücklichtes und/oder des Reflektors nicht sichtbar, weil es vollständig innerhalb des Rücklichtes und/oder des Reflektors angeordnet ist. Aufgrund der Ausbildung des Gehäuses des Rücklichtes und/oder Reflektors können Funkwellen als elektromagnetische Strahlung durch das Gehäuse zu der Antenne gelangen.

In einer ergänzenden Ausgestaltung umfasst das Rücklicht einen elektrische Gegensteckverbinder, insbesondere der elektrische Gegensteckverbinder an der rückseitigen oder seitlichen Oberfläche des Rücklichts und/oder des Reflektors ausgebildet ist.

Vorzugsweise sind oder ist an dem Rücklicht und/oder dem Reflektor wenigstens ein Formschlusselement, insbesondere mehrere Formschlusselemente, ausgebildet zur formschlüssigen und/oder kraftschlüssigen Fixierung des Rücklichts und/oder des Reflektors an einem Schutzblech des Fahrrades oder E-Bikes oder E-Scooters.

In einer weiteren Ausführungsform umfasst das Rücklicht und/oder der Reflektor vier, insbesondere im Eckbereich ausgebildete, Formschlusselemente.

Erfindungsgemäßes Diebstahlwarnsystem für ein Fahrrad oder E-Bike, umfassend als Komponenten eine Batterie, eine Positionseinheit zur satellitengestützten Bestimmung der Position, eine Funkverbindungseinheit zur Übersendung und/oder zum Empfang von Daten mit einer Funkverbindung, eine Antenne für die Positionseinheit und/oder die Funkverbindungseinheit, wenigstens ein Bauteil mit einem Gehäuse, wobei vorzugsweise das wenigstens eine Bauteil des Diebstahlwarnsystems mit dem Gehäuse wenigstens ein Formschlusselement, insbesondere mehrere Formschlusselemente, umfasst zur formschlüssigen und/oder kraftschlüssigen Fixierung des wenigstens einen Bauteils an einem Schutzblech des Fahrrades oder E-Bikes und/oder mit dem Diebstahlwarnsystem ein in dieser Schutzrechtsanmeldung beschriebenes Verfahren ausführbar ist und/oder das Diebstahlwarnsystem eine Kommunikationseinheit und/oder einen Server umfasst.

In einer zusätzlichen Variante umfasst das wenigstens eine Bauteil des Diebstahlwarnsystems mit dem Gehäuse vier, insbesondere im Eckbereich ausgebildete, Formschlusselemente.

Zweckmäßig umfasst das Diebstahlwarnsystem als Bauteil ein Rücklicht und/oder einen Reflektor und in das Rücklicht und/oder den Reflektor die Antenne für die Positionseinheit und/oder die Funkverbindungseinheit integriert ist.

In einer weiteren Ausführungsform umfasst das Diebstahlwarnsystem als Bauteile ein Bauteil in das die Batterie integriert ist und ein Bauteil in das die Positionseinheit und/oder die Funkverbindungseinheit integriert sind.

Erfindungsgemäßes Fahrrad oder E-Bike oder E-Scooter, umfassend einen Rahmen, zwei Räder, wenigstens ein Schutzblech für je ein Rad und das wenigstens eine Schutzblech je eine dem Rad zugewandte Innenseite und dem Rad abgewandte Außenseite aufweist, ein Diebstahlwarnsystem, wobei vorzugsweise das Diebstahlwarnsystem als ein in dieser Schutzrechtsanmeldung beschriebenes Diebstahlwarnsystem ausgebildet ist und/oder das Rücklicht und/oder der Reflektor als ein in dieser Schutzrechtsanmeldung beschriebenes Rücklicht und/oder der Reflektor ausgebildet ist.

In einer ergänzenden Variante ist wenigstens ein Bauteil des Diebstahlwarnsystems, insbesondere vollständig, an und/oder im Bereich der Innenseite des wenigstens einen Schutzbleches in radialer Richtung zwischen dem Rad und dem Schutzblech befestigt. Vorzugsweise bedeutet im Bereich der Innenseite des wenigstens einen Schutzbleches ein Abstand von weniger als 10 cm, 5 cm oder 1 cm zwischen dem Bauteil des Diebstahlwarnsystems und der Innenseite des Schutzbleches.

In einer weiteren Ausgestaltung ist an und/oder im Bereich der Innenseite des wenigstens einen Schutzbleches ein erstes und vorzugsweise ein zweites Gegenformschlusselement, insbesondere eine Nut, ausgebildet und an dem ersten und vorzugsweise zweiten Gegenformschlusselement wenigstens ein Bauteil des Diebstahlwarnsystems mit an dem wenigstens einen Bauteil ausgebildeten wenigstens einen Formschlusselement, insbesondere mehreren Formschlusselementen, formschlüssig und/oder kraftschlüssig, insbesondere mittels einer Rastverbindung und/oder Clipsverbindung, fixiert ist.

Insbesondere ist in dem Schutzblech eine Aussparung ausgebildet und in der Aussparung das Rücklicht und/oder der Reflektor mit integrierter Antenne als ein Bauteil des Diebstahlwarnsystems angeordnet ist. Vorzugsweise überragt das Rücklicht und/oder der Reflektor die Innenseite und/oder Außenseite des Schutzbleches.

Erfindungsgemäßes Verfahren zur Diebstahlüberwachung eines Fahrrades oder E-Bikes oder E-Scooters mit einem Diebstahlwarnsystem, insbesondere ein in dieser Schutzrechtsanmeldung beschriebenes Fahrrad oder E-Bike oder E-Scooter, mit den Schritten: Erfassen der Position des Fahrrades oder E-Bikes oder E-Scooters mit einer Positionseinheit zur satellitengestützten

Bestimmung der Position, Übersenden und/oder Empfang von Daten mit einer Funkverbindung mit einer Funkverbindungseinheit, Übersenden und/oder Empfang von Daten mit einer Funkverbindung zu einer Kommunikationseinheit, insbesondere einem Smartphone, wobei vorzugsweise die Übersendung und/oder der Empfang von Daten mit der Funkverbindung mit der Funkverbindungseinheit mit einer in ein Rücklicht und/oder Reflektor des Fahrrades oder E-Bikes integrierten Antenne ausgeführt wird und vorzugsweise Daten von der Funkverbindungseinheit zu der Kommunikationseinheit und vorzugsweise umgekehrt übertragen werden.

In einer weiteren Variante wird das Übersenden und/oder der Empfang von Daten mit der Funkverbindung mit der Funkverbindungseinheit mittels eines Servers ausgeführt.

In einer weiteren Ausführungsform wird das Übersenden und/oder der Empfang von Daten mit der Funkverbindung von und/oder zu der Kommunikationseinheit, insbesondere dem Smartphone, mittels eines Servers ausgeführt.

In einer weiteren Variante wird das Übersenden und/oder der Empfang von Daten mit der Funkverbindung von der Funkverbindungseinheit zu der Kommunikationseinheit und vorzugsweise umgekehrt indirekt oder mittelbar mittels eines Servers ausgeführt. Der Server ist beispielsweise in das Internet eingebunden.

In einer weiteren Variante wird das Übersenden und/oder der Empfang von Daten mit der Funkverbindung von der Funkverbindungseinheit zu der Kommunikationseinheit und vorzugsweise umgekehrt direkt oder unmittelbar ausgeführt, wobei vorzugsweise ein Protokoll zur Übertragung von Daten zwischen der Funkverbindungseinheit und der Kommunikationseinheit verwendet wird.

In einer zusätzlichen Ausführungsform werden die von der Funkverbindungseinheit zu der Kommunikationseinheit übertragenen Daten, auf einem Bildschirm der Kommunikationseinheit, beispielsweise als Punkte und/oder Linien in einer Landkarte.

In einer zusätzlichen Ausführungsform wird bei einem erfassten Diebstahl des Fahrrades oder E-Bikes oder E-Scooters von der Kommunikationseinheit ein optisches und/oder akustisches Warnsignal ausgegeben.

Vorzugsweise wird nach einem Diebstahl des Fahrrades oder E-Bikes oder E-Scooters die Position des Fahrrades oder E-Bikes oder E-Scooters auf dem Bildschirm der Kommunikationseinheit angezeigt.

In einer ergänzenden Variante wird die Position des Fahrrades oder E-Bikes oder E-Scooters auf einer Landkarte auf dem Bildschirm der Kommunikationseinheit angezeigt, insbesondere wird der Maßstab der Landkarte mittels einer optischen und/oder haptischen und/oder akustischen und//oder mechanischen Steuerung der Kommunikationseinheit verändert.

In einer ergänzenden Variante wird ein Diebstahl des Fahrrades oder E-Bikes oder des E-Scooters erfasst indem die Position des Fahrrades oder E-Bikes oder E-Scooters und vorzugsweise die Position der Kommunikationseinheit, insbesondere als Smartphone, in Abhängigkeit von der Zeit mittels Künstlicher Intelligenz, insbesondere Machine Learning, ausgewertet und/oder miteinander verglichen wird. Die Künstliche Intelligenz wird beispielsweise in dem Server und/oder in der Kommunikationseinheit ausgeführt.

In einer weiteren Ausführungsform wird mit Künstlicher Intelligenz, insbesondere Machine Learning, aus der Position des Fahrrades oder E-Bikes oder E-Scooters und vorzugsweise der Position der Kommunikationseinheit, insbesondere als Smartphone, in Abhängigkeit von der Zeit ein Modell für die Erfassung eines Diebstahles des Fahrrades oder E-Bikes oder des E-Scooters entwickelt durch Lernen und/oder Analyse der Daten zur Position des Fahrrades oder E-Bikes oder E-Scooters und vorzugsweise der Position der Kommunikationseinheit, insbesondere als Smartphone, in Abhängigkeit von der Zeit und somit ein Diebstahl des Fahrrades oder E-Bikes oder des E-Scooters erfasst. Die Daten zur Position des Fahrrades oder E-Bikes oder E-Scooters und vorzugsweise der Position der Kommunikationseinheit, insbesondere als Smartphone, in Abhängigkeit von der Zeit sind die Trainingsdaten für die Künstliche Intelligenz und aus diesen Trainingsdaten wird das Modell entwickelt, weil aufgrund der großen Datenmenge der Trainingsdaten als Einzelereignisse induktiv auf das allgemeine Modell als die Regel geschlossen wird. Künstliche Intelligenz oder im Englischen auch artificial intelligence ist ein Teilgebiet der Informatik mit dem Ziel, mit einem Computerprogramm betriebene Computer oder Maschinen, die von mit einem Computerprogramm betriebenen Computer gesteuert werden, intelligent zu machen. Als intelligent werden insbesondere die Eigenschaft verstanden, mit seiner Umgebung zu agieren, Information aufzunehmen und zu verarbeiten und als Wissen oder Daten zu speichern und Probleme, Lösungen, Regeln, Muster oder Erkenntnisse aus den Daten abzuleiten. Die Methoden der künstlichen Intelligenz lassen sich insbesondere in symbolische, neuronale, simulationsbezogene und phänomenologische Methoden unterscheiden. Das Machine Learning als selbstadaptiver Algorithmus ist ein Teilgebiet der Künstlichen Intelligenz bei der aus Daten mittels eines maschinellen Lernens Regeln, Muster und Gesetzmäßigkeiten abgeleitet und erkannt werden und dies wird mathematisch beispielsweise mittels Approximation, universellen Funktionsapproximatoren und/oder mit Wahrscheinlichkeitsrechnung und/oder Statistik ausgeführt, beispielsweise lineare Regression. Im Machine Learning werden aus Trainingsdaten, hier die Daten zur Position des Fahrrades oder E-Bikes oder E-Scooters und vorzugsweise der Position der Kommunikationseinheit, insbesondere als Smartphone, und hiervon abgeleiteten Daten, beispielsweise Fahrstrecke, Geschwindigkeit und Beschleunigungen, in Abhängigkeit von der Zeit mit numerischen, insbesondere statistischen und/oder phänomenologischen, Modellen Regeln, Muster und Gesetzmäßigkeiten erkannt. Mit Machine Learning können auch aus unbekannten Trainingsdaten als Lerntransfer die Regel, Muster und Gesetzmäßigkeiten erkannt werden. Das Schließen von Trainingsdaten auf hypothetische Modelle wird als statistische Referenz bezeichnet. Ein Computerprogramm wird in einer Programmiersprache, insbesondere Quellcode und/oder Maschinensprache, beschrieben. Ziel des Verfahrens ist es, aus der aktuellen Position des Fahrrades oder E-Bikes oder E-Scooters und vorzugsweise der aktuellen Position der Kommunikationseinheit, insbesondere als Smartphone, in Abhängigkeit von der Zeit einen Diebstahl des Fahrrades oder E-Bikes oder E-Scooters zu erfassen. Aus den Daten zur Position des Fahrrades oder E-Bikes oder E-Scooters und vorzugsweise der Position der Kommunikationseinheit, insbesondere als Smartphone, in Abhängigkeit von der Zeit können als weitere Daten als Trainingsdaten beispielsweise die Fahrstrecke, die Geschwindigkeit und/oder die Beschleunigung des Fahrrades oder E-Bikes oder E-Scooters als Bewegungsprofile bestimmt werden. Die Künstliche Intelligenz wird beispielsweise in dem Server und/oder in der Kommunikationseinheit ausgeführt. Damit kann ein Diebstahl des Fahrrades, E-Bikes oder E-Scooters erfasst werden ohne dass der Benutzer der Kommunikationseinheit ein Abstellen oder eine Nichtbenutzung des Fahrrades oder E-Bikes oder E-Scooters in der Kommunikationseinheit eingibt oder aufgrund einer Nichtbenutzung ab einem vorgegebenen Zeitraum einer unveränderten Position automatisch erfasst wird. Vorzugsweise wird bei einer mit Künstlicher Intelligenz erfassten Diebstahl nur an der Kommunikationseinheit ein Warnsignal mit geringer Intensität, beispielsweise kleine Lautstärke, ausgegeben und nicht an dem Fahrrad, E-Bike oder E-Scooter. Der Nutzer des Diebstahlwarnsystems kann beispielsweise auch vor der erstmaligen Benutzung des Diebstahlwarnsystems in die Kommunikationseinheit häufig von ihm gefahrene Fahrstrecken eingeben und/oder von ihm nicht gefahrene Fahrstrecken und/oder Fahrradräume eingeben und anschließend eine fiktive Fahrstrecke von einem fiktiven Dieb eingeben, sodass mit diesen eingegebenen Trainingsdaten die Künstliche Intelligenz angelernt werden kann.

In einer weiteren Ausführungsform wird der Diebstahl des Fahrrades oder E-Bikes oder E-Scooters erfasst indem von dem Benutzer der Kommunikationseinheit ein Abstellen oder eine Nichtbenutzung des Fahrrades oder E-Bikes oder E-Scooters eingegeben wird und bei einer anschließenden Veränderung der Position des Fahrrades oder E-Bikes oder E-Scooters über einen Grenzwert hinaus der Diebstahl erfasst wird.

In einer zusätzlichen Ausführungsform wird der Diebstahl des Fahrrades oder E-Bikes oder E-Scooters erfasst indem von dem Benutzer der Kommunikationseinheit ein Abstellen oder eine Nichtbenutzung des Fahrrades oder E-Bikes oder E-Scooters eingegeben wird und bei einer anschließenden mit einem Beschleunigungssensor erfassten Beschleunigung der Diebstahl erfasst wird.

In einer weiteren Ausführungsform wird der Diebstahl des E-Bikes oder E-Scooters erfasst indem vor Beginn jeder Fahrt der Traktionselektromotor und die Traktionsbatterie freigeschaltet werden von den Nutzer, beispielsweise mit einem RFID-Chip und/oder einer Software in der Kommunikationseinheit, insbesondere mit einer Funkverbindung, vorzugsweise einer Bluetooth-Verbindung, und nach der Beendigung der Fahrt mit dem E-Bike oder dem E-Scooter die Freischaltung des Traktionselektromotors und der Traktionsbatterie aufgehoben werden und bei einer Fahrt mit dem E-Bike oder E-Scooter bei einer aufgehobenen Freischaltung des Traktionselektromotors und der Traktionsbatterie der Diebstahl erfasst wird, beispielsweise bei einer Veränderung der Position des Fahrrades oder E-Bikes oder E-Scooters über einen Grenzwert hinaus. Bei der aufgehobenen Freischaltung des Traktionselektromotors und der Traktionsbatterie erfolgt keine Unterstützung der Fahrt mit dem Traktionselektromotor. Das Aufheben der Freischaltung des Traktionselektromotors und der Traktionsbatterie wird beispielsweise von dem Nutzer an deren Kommunikationseinheit eingegeben und/oder aufgrund eines fehlenden Signals von dem RFID-Chip und/oder bei einem Stillstand des E-Bikes oder E-Scooters über einen Zeitraum der größer ist als ein vorgegebener Grenzwert automatisch erfasst.

In einer zusätzlichen Ausführungsform werden die Batterie des Diebstahlwarnsystems mit elektrischer Energie aus einer Traktionsbatterie aufgeladen und/oder mit elektrischer Energie von Photovoltaikelementen an dem Fahrrad oder E-Bike oder E-Scooter.

Vorzugsweise sind an dem Fahrrad oder E-Bike oder E-Scooter, insbesondere dem Schutzblech und/oder Rücklicht und/oder Reflektor Photovoltaikelemente ausgebildet zum Aufladen der Batterie des Diebstahlwarnsystems. Vorzugsweise sind die Photovoltaikelemente mit einem Stromkabel elektrisch mit der Batterie verbunden.

In einer zusätzlichen Ausführungsform wird nach oder bei einem Diebstahl an dem Fahrrad oder E-Bike oder E-Scooter ein optisches und/oder akustisches Warnsignal ausgegeben.

In einer zusätzlichen Ausführungsform wird an der Kommunikationseinheit eingegeben ob bei einem Diebstahl des Fahrrades oder E-Bikes oder E-Scooters ein optisches und/oder akustisches Warnsignal ausgegeben wird oder nicht ausgegeben wird.

In einer ergänzenden Ausführungsform umfasst das Diebstahlwarnsystem einen DC/DC-Wandler und/oder eine Ladekontrollvorrichtung und/oder eine Recheneinheit, insbesondere einen Computer oder einen Mikrocontroller.

In einer zusätzlichen Ausführungsform umfasst das Fahrrad oder E-Bike oder E-Scooter eine optisches und/oder akustisches Warneinheit. Mit der Warneinheit kann ein optisches und/oder akustisches Warnsignal nach oder bei einem Diebstahl an dem Fahrrad oder E-Bike oder E-Scooter ausgegeben werden.

In einer zusätzlichen Ausführungsform umfasst ein Ventil für ein Rad des Fahrrades oder E-Bikes oder E-Scooters eine Batterie, eine Steuerungseinheit mit einer Antenne und einen Aktuator und bei einem Diebstahl des Fahrrades oder E-Bikes oder E-Scooters wird das Ventil selbstständig geöffnet, sodass die Luft aus dem Schlauch oder Reifen in die Umgebung entweicht und damit das Fahrrad oder E-Bike oder der E-Scooter nicht mehr benutzt werden kann. Mittels einer Funkverbindung zwischen dem Ventil und dem Diebstahlwarnsystem kann damit die weitere Benutzung des Fahrrades oder E-Bikes oder E-Scooters einem Diebstahl unterbunden werden.

In einer zusätzlichen Ausführungsform wird bei einem Diebstahl des Fahrrades oder E-Bikes oder E-Scooters der Traktionselektromotor ausgeschaltet.

In einer zusätzlichen Ausführungsform sind je zwei in Querrichtung gegenüberliegend ausgebildete Formschlusselemente an dem ersten und/oder zweiten und/oder dritten Bauteil kraftschlüssig an dem Schutzbleich befestigt, indem diese je zwei in Querrichtung gegenüberliegend ausgebildete Formschlusselemente mit einer Druckkraft auf dem ersten und zweiten Gegenformschlusselement aufliegen.

In einer weiteren Ausführungsform umfassen sämtliche Bauteile des Diebstahlwarnsystems mit dem Gehäuse wenigstens ein Formschlusselement, insbesondere mehrere Formschlusselemente, zur formschlüssigen und/oder kraftschlüssigen Fixierung des Rücklichts und/oder des Reflektors an dem Schutzblech des Fahrrades oder E-Bikes oder E-Scooters.

Vorzugsweise umfassen sämtlichen Bauteile des Diebstahlwarnsystems mit dem Gehäuse vier, insbesondere im Eckbereich ausgebildete, Formschlusselemente.

In einer weiteren Variante fungiert das Rücklicht zusätzlich als Bremslicht. Beispielsweise weist das Rücklicht eine elektrische Leistung von 1 W auf und das Bremslicht von 4 W.

In einer weiteren Ausführungsform ist der Reflektor als ein Retroreflektor ausgebildet. Retroreflektoren werden an Fahrrädern oder E-Bikes oder E-Scootern eingesetzt, um von hinten auf das Fahrrad oder E-Bike oder E-Scooter einfallende Licht zu Retroreflektieren, d. h. dass das einfallende Licht und das retroreflektierte Licht im Wesentlichen, insbesondere mit einer Abweichung von weniger als 5°, 3° oder 2°, die gleiche Richtung aufweisen, d. h. im Wesentlichen parallel sind. Das an einer Lichtquelle, beispielsweise einem Frontscheinwerfer eines Personenkraftwagens, erzeugte Licht als einfallendes Licht wird wieder als retroreflektiertes Licht zu dem Personenkraftwagen zurück retroreflektiert, so dass am Personenkraftwagen das retroreflektierte Licht sichtbar ist und damit der Retroreflektor auch bei Dunkelheit und Nacht optisch wahrgenommen werden kann. Retroreflektoren mit integriertem Rücklicht haben den Vorteil, dass kein zusätzliches Rücklicht als ergänzendes Bauteil an dem Fahrrad oder E-Bike notwendig ist.

Vorzugsweise umfasst das Rücklicht und/oder Reflektor für ein Fahrrad oder E-Bike oder E-Scooter eine vorderseitige, konvex gekrümmte Oberfläche, lichtdurchlässig zu der vorderseitigen Oberfläche angeordnete Retroreflektorelemente und/oder wenigstens eine Lichtquelle.

Vorzugsweise umfasst das Rücklicht und/oder Reflektor für ein Fahrrad oder E-Bike oder E-Scooter eine rückseitige Oberfläche zur Anordnung an dem Fahrrad oder E-Bike oder E-Scooter, wobei die rückseitige Oberfläche konkav gekrümmt ausgebildet ist. Die konkav gekrümmte rückseitige Oberfläche des Retroreflektors ermöglicht eine verbesserte Montage für einen optimierte, minimalen und im Wesentlichen, insbesondere mit einer Abweichung von weniger als 30%, 20% oder 10%, konstanten Abstand zwischen der rückseitigen Oberfläche des Rücklichts und/oder Reflektors und dem Rad in radialer Richtung bezüglich der Rotationsachse des Rades.

In einer ergänzenden Ausgestaltung ist das Rücklicht und/oder der Reflektor bandförmig und/oder im Wesentlichen O-förmig ausgebildet.

Vorzugsweise umfasst das Rücklicht wenigstens 2, 4, 5, 7, 10, 15 oder 20 Lichtquellen.

In einer weiteren Variante ist die wenigstens eine Lichtquelle mit elektrischer Energie betreibbar.

In einer zusätzlichen Variante sind die Lichtquellen als LEDs und/oder Halogenlampen ausgebildet.

In einer weiteren Ausgestaltung sind die Lichtquellen mit einer Leiterplatte mechanisch und/oder elektrisch verbunden. Die elektrische Verbindung der Lichtquellen mit der Leiterplatte dient zur Bestromung der Lichtquellen.

In einer weiteren Ausgestaltung ist das Rücklicht und/oder der Reflektor im Wesentlichen bandförmig und/oder streifenförmig ausgebildet mit einer Längsausdehnung und Querausdehnung und die Längsausdehnung ist Wesentlich größer ist als die Querausdehnung. Im Wesentlichen bedeutet vorzugsweise, dass die Längsausdehnung wenigstens um das 2-, 3,- 4-, 5-, 7-, 8- oder 10-Fache größer ist als die Querausdehnung des Rücklichts und/oder Reflektors. Das Rücklicht und/oder der Retroreflektor weist eine große Fläche an der vorderseitigen Oberfläche auf und eine kleine Querausdehnung und ist damit raumsparend und bei einer guten Designeinbindung und kann in dem Schutzblech mit einer kleinen Breite bzw. Querausdehnung montiert werden

Zweckmäßig ist die durchsichtige Deckwandung der vorderseitige Teil des Gehäuses des Rücklichts und/oder Retroreflektors aus Glas oder Kunststoff ausgebildet. Vorzugsweise ist die durchsichtige Deckwandung eine Folie.

In einer zusätzlichen Ausführungsform ist das Gehäuse, insbesondere der vorderseitige Teil des Gehäuses und/oder der rückseitige Teil des Gehäuses, des ersten Bauteils und/oder des zweiten Bauteils und/oder des dritten Bauteils des Diebstahlwarnsystems wenigstens teilweise, insbesondere vollständig, aus Kunststoff ausgebildet.

Vorzugsweise ist die Antenne wenigstens teilweise, insbesondere vollständig, aus Metall ausgebildet.

In einer weiteren Ausführungsform beträgt die Oberfläche der Antenne in dem Rücklicht und/oder Reflektor. zwischen 1% und 100%, insbesondere zwischen 10% und 50%, der Oberfläche der vorderseitigen Oberfläche des Rücklichts und/oder Reflektors.

In einer ergänzenden Ausführungsform umfasst das Rücklicht eine Leiterplatte als Platine mit den Lichtquellen, insbesondere LEDs, und vorzugsweise Widerstände und vorzugsweise wenigstens einem elektronischen Bauteil, insbesondere Mikroprozessor, zur Veränderung des Widerstandes für die Leistung der LEDs und die Antenne ist auf der Leiterplatte angeordnet.

Vorzugsweise sind auf einer Seite der Leiterplatte die Lichtquellen, insbesondere LEDs, und vorzugsweise Widerstände und vorzugsweise wenigstens einem elektronischen Bauteil, insbesondere Mikroprozessor, zur Veränderung des Widerstandes für die Leistung der LEDs und auf der anderen gegenüberliegenden Seite der Leiterplatte ist die Antenne angeordnet.

In einer weiteren Ausgestaltung ist die Längsausdehnung des Reflektors und/oder Rücklichts größer als 40 mm, 60 mm, 80 mm 10 mm oder 120 mm.

In einer weiteren Ausgestaltung ist die Längsausdehnung des Reflektors und/oder Rücklichts kleiner als 300 mm 200 mm, 150 mm, 120 mm oder 100 mm.

Vorzugsweise ist die Querausdehnung des Reflektors und/oder Rücklichts zwischen 50 mm und 5 mm, vorzugsweise zwischen 35 mm und 15 mm.

Zweckmäßig ist die Dicke des Reflektors und/oder Rücklichts zwischen 2 mm und 30 mm, vorzugsweise zwischen 3 mm und 20 mm, insbesondere zwischen 4 mm und 15 mm.

In einer weiteren Ausgestaltung umfasst der Retroreflektor wenigstens 3, 5, 10, 20, 30, 50, 70, 90, 100 oder 120 Retroreflektorelemente.

In einer weiteren Ausgestaltung ist die vorderseitige Oberfläche im Wesentlichen teilzylindermantelförmig ausgebildet.

In einer ergänzenden Variante ist der Krümmungsradius der gekrümmten vorderseitigen Oberfläche und/oder der gekrümmten rückseitigen Oberfläche des wenigstens einen Bauteils im Wesentlichen konstant, insbesondere mit einer Abweichung von weniger als 30%, 20%, 10%, 5%, 3%, 2% oder 1%.

In einer ergänzenden Variante ist der Krümmungsradius der gekrümmten vorderseitigen Oberfläche und/oder der gekrümmten rückseitigen Oberfläche des wenigstens einen Bauteils im Wesentlichen, insbesondere mit einer Abweichung von weniger als 30%, 20%, 10%, 5%, 3%, 2% oder 1%, der Radius der Außenseite des Schutzbleches als der radiale Abstand zu der Rotationsachse des Rades.

Zweckmäßig ist der Radius der Außenseite des Schutzbleches größer als 200 mm, 240 mm, 260 mm, 300 mm oder 350 mm und/oder kleiner als 500 mm, 420 mm, 400 mm oder 390 mm.

Zweckmäßig ist der Streuwinkel des Retroreflektors zwischen 0,2° und 7°, vorzugsweise zwischen 0,5° bis 3°, insbesondere zwischen 0,7° und 2°.

Vorzugsweise sind die Retroreflektorelemente als Winkelreflektoren, insbesondere Tripelspiegel, und/oder Linsenreflektoren und/oder Tripelprismen und/oder Lüneburg-Linsen ausgebildet.

Die Erfindung umfasst ferner ein Computerprogramm mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird. Software und/oder eine App ist ein Computerprogramm.

Bestandteil der Erfindung ist außerdem ein Computerprogrammprodukt mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird. Der computerlesbare Datenträger ist beispielsweise eine Festplattenlaufwerk, insbesondere ein HDD oder SSD, ein USB-Stick, eine DVD (Digital Versatile Disc) und/oder CD (Compact Disk).

Im Nachfolgenden wird ein Ausführungsbeispiel der Erfindung unter Bezugnahme auf die beigefügten Zeichnungen näher beschrieben.

Es zeigt:
- Fig. 1: eine Seitenansicht eines Fahrrades oder E-Bikes
- Fig. 2: eine perspektivische Teilansicht eines Schutzbleches mit einer Aussparung,
- Fig. 3: eine perspektivische Vorderansicht eines Rücklichtes als ein drittes Bauteil eines Diebstahlwarnsystems,

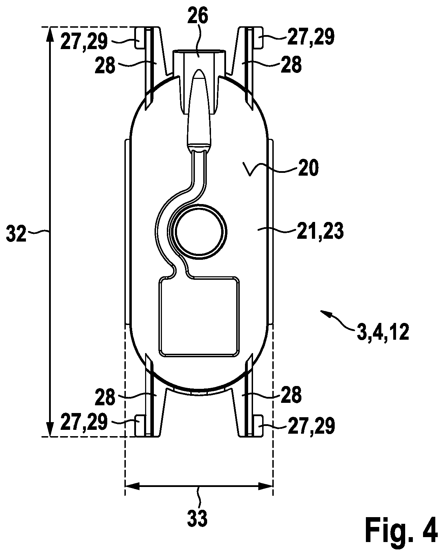

- Fig. 4: eine Rückansicht des Rücklichtes gemäß Fig. 3,
- Fig. 5: eine perspektivische Vorderansicht eines ersten und zweiten Bauteils eines Diebstahlwarnsystems,

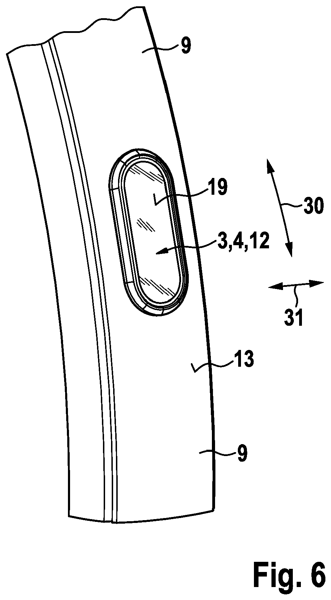

- Fig. 6: eine perspektivische Teilansicht des Schutzbleches mit einer Aussprung gemäß Fig. 1 mit dem Rücklicht fixiert in der Aussparung,

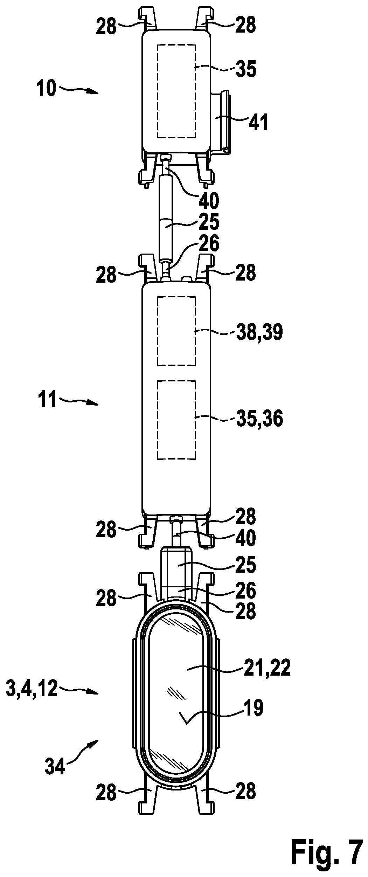

- Fig. 7: eine Vorderansicht des Diebstahlwarnsystems mit dem ersten, zweiten und dritten Bauteil,

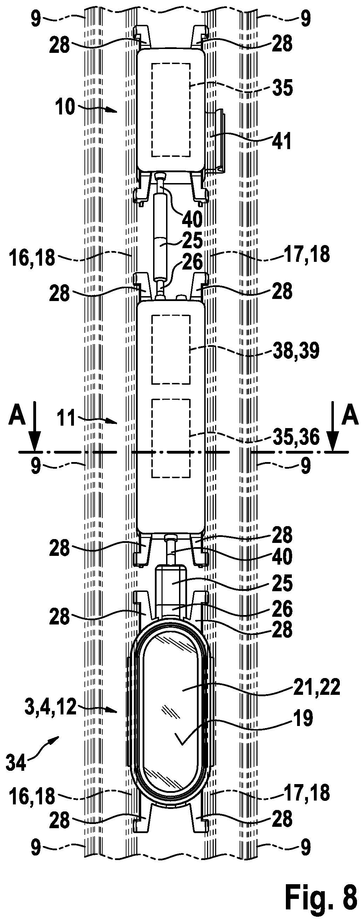

- Fig. 8: eine Vorderansicht des Diebstahlwarnsystems mit dem ersten, zweiten und dritten Bauteil mit dem Schutzblech in einer strichlierten Darstellung,

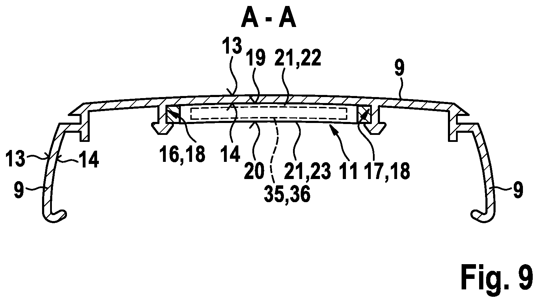

- Fig. 9: einen Querschnitt durch das Schutzblech mit dem an der Innenseite des Schutzbleches fixierten zweiten Bauteil als Schnitt A-A in Fig. 8.

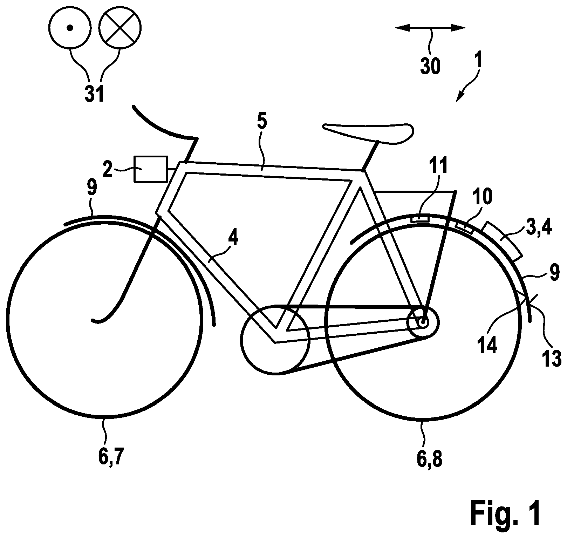

In Fig. 1 ist ein Fahrrad 1 oder ein E-Bike 1 bzw. Elektrofahrrad 1 dargestellt. Das Fahrrad 1 weist einen Rahmen 5 auf und an dem Rahmen 5 sind zwei Räder 6 gelagert, nämlich ein Vorderrad 7 und ein Hinterrad 8. An dem Vorderrad 7 und dem Hinterrad 8 ist jeweils ein an dem Rahmen 5 befestigtes Schutzblech 9 angeordnet. Das Fahrrad 1 weist eine Längsrichtung 30 und eine Querrichtung 31 auf. Ein Frontscheinwerfer 2 dient zur vorderseitigen aktiven Ausleuchtung. Ferner ist an dem Schutzblech 9 des Hinterrades 8 ein Retroreflektor 4 mit integrierten Rücklicht 3 befestigt. Das Rücklicht 3 dient zur rückseitigen Erkennung des Fahrrades 1 bei Dunkelheit oder Nacht indem Lichtquellen als LEDs des Rücklichtes 3 bestromt werden zur aktiven Ausstrahlung von Licht. Der Retroreflektor 4 retroreflektiert, insbesondere bei Dunkelheit oder Nacht, von anderen Fahrzeugen einfallendes Licht zur rückseitigen passiven Erkennung des Fahrrades 1 mit nicht dargestellten Retroreflektorelementen. Retroreflektoren 4 retroreflektieren einfallende elektromagnetische Wellen, insbesondere Licht, im Wesentlichen in die gleiche Richtung, d. h. die Einfallsrichtung des einfallenden Lichtes und die Reflexionsrichtung des retroreflektierten Lichtes sind im Wesentlichen identisch und/oder parallel. Die Augen der Fahrer von Fahrzeugen weisen einen Abstand zu den Scheinwerfern des Fahrzeuges auf, so dass es notwendig ist, dass Retroreflektoren 4 einen Streuwinkel im Bereich von 0,5° bis 3° aufweisen. Der Streuwinkel ist notwendig, damit das retroreflektierte Licht nicht nur zu den Scheinwerfern gelangt, sondern auch zu den Augen des Fahrers des Fahrzeuges.

Das Rücklicht 3 und der Retroreflektor 4 weist die Längsrichtung 30 und eine Querrichtung 31 auf. Eine Längsausdehnung 32 des Rücklichts 3 in der gekrümmten Längsrichtung 30 beträgt 115 mm. Eine Querausdehnung 33 des Rücklichtes 3 in der Querrichtung 31 beträgt 25 mm. Die Querausdehnung 33 ist im Wesentlichen, insbesondere mit einer Abweichung von weniger als 30 %, 20 % oder 10 %, konstant. Eine Dicke des Rücklichtes beträgt 9 mm und ist konstant. Der Retroreflektor 4 ist in einem Längsschnitt gekrümmt ausgebildet im Wesentlichen, insbesondere mit einer Abweichung von weniger als 30 %, 20 % oder 10 %, mit einem Krümmungsradius und der Krümmungsradius ist der radiale Abstand einer radialen Außenseite 13 des Schutzbleches 9 zu dem Mittelpunkt oder der Rotationsachse des Hinterrades 8 (Fig. 1). In einem Querschnitt ist der Retroreflektor 4 im Wesentlichen eben ausgebildet.

Das Rücklicht 3 weist eine vorderseitige Oberfläche 19 und eine rückseitige Oberfläche 20 auf. Die vorderseitige Oberfläche 19 ist konvex gekrümmt und die rückseitige Oberfläche 20 ist konkav gekrümmt mit dem Krümmungsradius, welcher im Wesentlichen, insbesondere mit einer Abweichung von weniger als 30%, 20% oder 10%, dem radialen Abstand des Rücklichtes 3 von der Rotationsachse des Hinterrades 8 entspricht. Das Rücklicht 3 umfasst ein Gehäuse 21. Das Gehäuse 21 aus Kunststoff umfasst ein vorderseitige Teil 22 und eine rückseitige Teil 23. Das vorderseitige Teil 22 bildet unter anderem auch die vorderseitige Oberfläche 19. Das rückseitige Teil 23 des Gehäuses 21 bildet auch die rückseitige Oberfläche 20 des Rücklichtes 3. Seitenwandungen des vorderseitigen Teils 22 und des rückseitigen Teils 23 bilden eine zeitliche Oberfläche des Rücklichtes 3. Der vorderseitige Teil 22 des Gehäuses 21 ist durchsichtig. Innerhalb des Gehäuses 21 sind Lichtquellen und Retroreflektorelemente angeordnet (nicht dargestellt).

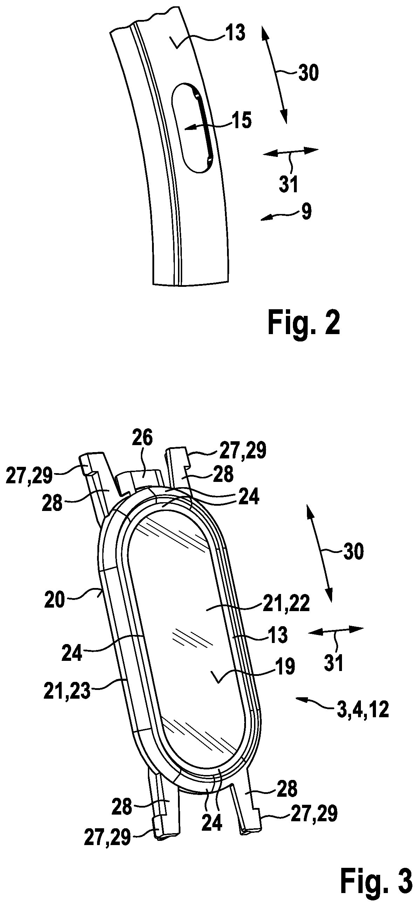

An der seitlichen Oberfläche, begrenzt von einer Seitenwandung des vorderseitigen Teils 22 und des rückseitigen Teil 23 des Gehäuses 1, ist an dem Rücklicht 3 ein elektrischer Gegensteckverbinder 26 ausgebildet. In dem elektrischen Gegensteckverbinder 26 sind nicht dargestellte elektrische Gegenkontaktelemente aus Metall ausgebildet. Zusätzlich ist in das Rücklicht 3 und damit auch in den Retroreflektor 4 eine Antenne 24 integriert. Die Antenne 24 aus Metall ist in einer Nut und Vertiefung an dem vorderseitigen Teil 24 des Gehäuses 21 angeordnet, sodass die Oberseite der Antenne 24 und die Oberseite des vorderseitigen Teils 22 des Gehäuses 21 bündig die gemeinsame vorderseitige Oberfläche 19 bilden. Die Antenne 24 ist als ein den Randbereich des Rücklichtes 3 oder des Reflektors 4 vollständig umlaufender Ring ausgebildet mit zusätzlichen Fortsätzen gemäß der Darstellung in Fig. 3 am oberen und unteren Endbereich an der Seitenwandung oder der seitlichen Oberfläche des Rücklichtes 3 und oder des Reflektors 4.

An den 4 Eckbereichen des rückseitigen Teils 23 des Gehäuses 21 sind 4 Kragarme 28 ausgebildet. Die Ausdehnung der Kragarme 23 in der Längsrichtung 30 ist wesentlich größer als in der Querrichtung 31, beispielsweise wenigstens und das 2-Fache oder 3-Fache. Die Kragarme 28 sind dabei im Wesentlichen in der Längsrichtung 30 ausgerichtet. An den Endbereichen der Kragarme 23 sind Rastnasen 29 ausgebildet. Die Rastnasen 29 sind dabei im Wesentlichen in der Querrichtung 31 ausgerichtet als Vorsprünge nach außen. Die Rastnase 29 bilden dabei Formschlusselemente 27 zur formschlüssigen und kraftschlüssigen Fixierung des Rücklichtes 3 an einem ersten Gegenformschlusselement 16 und an einem zweiten Gegenformschlusselement 17 an dem Schutzbleich 9.

Das Schutzbleich 9 weist eine Innenseite 14 und eine Außenseite 13 auf. An der Innenseite 14 sind 2 Nuten 18 oder Schienen 18 ausgebildet und die Nuten 18 oder Schienen 18 weisen einen im Wesentlichen konstanten Abstand in der Querrichtung 31 zueinander auf. Die zwei Nuten 18 oder Schienen 18 bilden das erste und zweite Gegenformschlusselement 16,17. In dem Schutzbleich 9 ist zusätzlich eine Aussparung 15 ausgebildet. Die Form und Geometrie der Aussparung 15 entspricht im Wesentlichen der Form und Geometrie der Seitenwandungen und/oder der seitlichen Oberfläche des Rücklichtes 3. Zur Fixierung des Rücklichtes 3 an dem Schutzbleich 9 wird das Rücklicht 3 von dem Bereich oder einem Raum an der Innenseite 14 des Schutzbleches 9 mit der vorderseitigen Oberfläche 19 durch die Aussparung 15 durchgeführt bis die Kragarme 28 an der Innenseite 14 als Anschlag aufliegen und die Rastnasen 29 als die Formschlusselemente 27 in dem ersten und zweiten Gegenformschlusselement 16, 17 einrasten als Clipsverbindung oder Rastverbindung. Die Geometrie der Innenseite 14 des Schutzbleches 9 ist dabei dahingehend ausgebildet, dass während der Bewegung des Rücklichtes 3 durch die Aussparung 15 der Abstand zwischen je zwei in Querrichtung 31 gegenüberliegenden Rastnasen 29 aufgrund einer konisch zulaufende Innenseite 14 des Schutzbleches 9 verkleinert wird mittels einer Biegung des Kragarme 29 und anschließend die Rastnasen 29 als die Formschlusselemente 27 in das erste und zweite Gegenformschlusselement 16, 17 aufgrund einer Vorspannung der Kragarme 28 einrasten. Die Rastnasen 29 sind aufgrund der Vorspannung der Kragarme 28 zusätzlich mit einer Druckkraft auf das erste und zweite Gegenformschlusselement 16, 17 gedrückt, sodass die Formschlusselemente 27 nicht nur formschlüssig, sondern auch kraftschlüssig an dem ersten und zweiten Gegenformschlusselement 16, 17 befestigt sind.

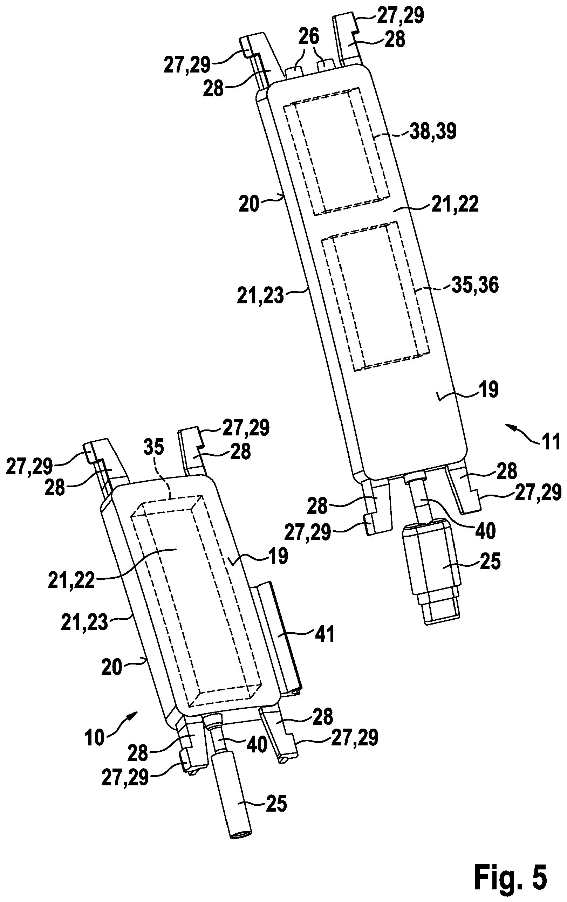

Ein Diebstahlwarnsystem 34 umfasst eine Batterie 35, eine Positionseinheit 36 zur satellitengestützten Bestimmung der Position des Diebstahlwarnsystems 34 als eine GPS-Positionseinheit 37 und eine Funkverbindungseinheit 38 als eine LTE- oder 5G-Funkverbindungseinheit. 39 Die Funkverbindungseinheit 38 kann somit Daten mit einem Mobilfunknetz übertragen und empfangen und umfasst vorzugsweise eine SIM-Karte, insbesondere fest integriert. Das Diebstahlwarnsystem 34 umfasst ein erstes Bauteil 10, ein zweites Bauteil 11 und ein drittes Bauteil 12. Das erste und zweite Bauteil 10, 11 weist ähnlich wie das Rücklicht 3 ein Gehäuse 21 auf mit einem vorderseitigen Teil 22 und einem rückseitigen Teil 23. Der vorderseitige Teil 22 ist jedoch an dem ersten und zweiten Bauteil 10, 11 nicht durchsichtig und nicht lichtdurchlässig. In analoger Weise wie bei dem Rücklicht 3 sind an dem ersten und zweiten Bauteil 10, 11 Kragarme 28 mit Rastnasen 29 als Formschlusselemente 29 ausgebildet. In das erste Bauteil 10 ist die Batterie 35, insbesondere eine Lithiumionenbatterie 35 welche aufladbar ist, eingebaut. In das zweite Bauteil 11 ist die Positionseinheit 36 und die Funkverbindungseinheit 38 eingebaut. Das erste Bauteil 10 umfasst ein Stromkabel 40 mit einem elektrischen Steckverbinder 25. Das zweite Bauteil 11 umfasst an einem seitlichen Bereich oder an einer Seitenwandung an einer Schmalseite einen elektrischen Gegensteckverbinder 26. Zusätzlich ist bei dem zweiten Bauteil 11 (Fig. 5) an dem seitlichen Bereich oder an einer Seitenwandung gegenüberliegend zu dem elektrischen Gegensteckverbinder 26 an der Schmalseite ein Stromkabel 40 mit einem elektrischen Steckverbinder 25 ausgebildet.

Das erste Bauteil 10 und das zweite Bauteil 11 des Diebstahlwarnsystems 34 sind in analoger Weise wie das Rücklicht 3 mit den Kragarmen 28 und den Rastnasen 29 als den Formschlusselementen 27 an dem ersten und zweiten Gegenformschlusselement 16, 17 als den Nuten 18 oder Schienen 18 an der Innenseite 14 des Schutzbleches 9 zwischen dem Rad 6 und dem Schutzblech 9 befestigt. Das erste Bauteil 10 und das zweite Bauteil 11 ragt jedoch nicht durch eine Aussparung 15 wie das Rücklicht 3, sondern sind vollständig zwischen dem Schutzbleich 9 und dem Hinterrad 8 angeordnet. Die Krümmung des ersten Bauteils 10 und des zweiten Bauteils 11 entspricht analog wie bei dem Rücklicht 3 im Wesentlichen dem Krümmungsradius als dem Abstand zwischen der Rotationsachse des Hinterrades 8 und dem ersten und zweiten Bauteil 10, 11. Das erste Bauteil 10, das zweite Bauteil 11 und das dritte Bauteil 12 sind mit den Stromkabeln 40, den elektrischen Steckverbinder 25 und den elektrischen Gegensteckverbinder 26 strom leitend miteinander verbunden zur Übertragung von elektrischer Energie, Daten sowie Sendesignalen und Empfangssignale mittels der Antenne 24. Das erste Bauteil 10 mit der Batterie 35 weist seitlich einen Steg 41 auf, um die Fixierung des ersten Bauteils 10 von dem Schutzblech 9 lösen zu können für einen Austausch des Bauteils 10 oder zum Aufladen der Batterie 35 in dem Bauteil 10 ohne Fixierung an dem Schutzblech 9.

Das Diebstahlwarnsystem 34 überträgt die von der Positionseinheit 36 erfasste Position des Diebstahlwarnsystems 34 und damit des Fahrrades 1 oder E-Bikes 1 mit der Funkverbindungseinheit 38 kontinuierlich zu einem nicht dargestellten Server, der in das Internet eingebunden ist. In diesem Server werden die Daten zur Position erfasst und vorzugsweise gespeichert. Eine nicht dargestellte Kommunikationseinheit, beispielsweise ein Smartphone oder Computer mit einer entsprechenden Software als App als Computerprogramm, dient zur Steuerung des Diebstahlwarnsystems 34 und zur Anzeige der von dem Diebstahlwarnsystem 34 erfassten Daten. Mit der Kommunikationseinheit kann beispielsweise auf einem Bildschirm ständig die Position des Diebstahlwarnsystems 34 und damit auch des Fahrrades 1 oder E-Bikes 1 angezeigt werden. Ein Diebstahl des Fahrrades 1 oder E-Bikes 1 wird beispielsweise durch ein optisches und/oder akustisches Warnsignal an der Kommunikationseinheit angezeigt. Der Diebstahl des Fahrrades 1 oder E-Bikes 1 wird beispielsweise dadurch erfasst, dass bei der Kommunikationseinheit eine Nichtbenutzung oder ein Abschließen des Fahrrades 1 oder E-Bikes 1 eingeben wird, sodass sich damit die Position des Fahrrades 1 oder E-Bikes 1 nicht mehr verändern darf.

Abweichend oder ergänzend kann ein Diebstahl beispielsweise mit einem in das Diebstahlwarnsystem 34 integrierten Beschleunigungssensor (nicht dargestellt) erfasst werden Bei der Kommunikationseinheit wird eine Nichtbenutzung oder ein Abschließen des Fahrrades 1 oder E-Bikes 1 eingegeben, sodass keine Beschleunigung des Fahrrades 1 oder E-Bikes 1 mehr eintreten darf. Der nicht dargestellte Beschleunigungssensor ist beispielsweise in das zweite Bauteil 11 integriert. Tritt trotzdem eine Beschleunigung des Fahrrades 1 oder E-Bikes 1 über einen vorgegebenen Grenzwert auf, erfolgt die Ausgabe des optischen und/oder akustischen Warnsignales und/oder die Erfassung des Diebstahls.

Die Daten zur Position des Fahrrades oder E-Bikes können auch mit Künstlicher Intelligenz ausgewertet werden, so dass ohne die aktive Eingabe einer Nichtbenutzung oder eines Abschließen des Fahrrades 1 oder E-Bikes 1 durch den Nutzer der Diebstahl erfasst wird.

Darüber hinaus kann mit der Kommunikationseinheit ständig die Position des entwendeten Fahrrades 1 oder E-Bikes 1 angezeigt werden, sodass das Fahrrad 1 oder E-Bike 1 einfach wiedergefunden und möglicherweise ein Dieb gefasst werden kann. Aufgrund der ständigen Erfassung der Position des Fahrrades 1 oder E-Bikes 1 kann auch eine zurückgelegte Route hinsichtlich der Fahrpositionen, der aktuellen Geschwindigkeit oder der durchschnittlichen Geschwindigkeit erfasst und ausgegeben werden. Das erste Bauteil 10 mit der Batterie 35 kann einfach zum Aufladen ausgetauscht werden. Bei einem E-Bike 1 mit einer Traktionsbatterie und einem Traktionselektromotor (nicht dargestellt) kann die Batterie 35 des ersten Bauteils 10 mit elektrischer Energie aus der Traktionsbatterie aufgeladen werden. Das Rücklicht 3 als das dritte Bauteil 12 wird für die Funktion als Rücklicht und optional als Bremslicht mit elektrischer Energie aus der Traktionsbatterie versorgt mit einem nicht dargestellten Stromkabel 40. Diese Versorgung des Rücklichts 3 kann aufgrund der elektrischen Verbindung von dem Rücklicht 3 zu der Batterie 35 durch das zweite Bauteil 11 zum Aufladen der Batterie 35 genutzt werden, insbesondere während der Fahrt. Optional sind beispielsweise bei einem Fahrrad 1 ohne Traktionsbatterie und ohne Traktionselektromotor in das Rücklicht 3 und/oder auf der Außenseite des Schutzbleches 9 Photovoltaikelemente angeordnet, sodass mittels elektrischer Energie aus Licht erzeugt von den Photovoltaikelementen die Batterie 35 aufgeladen werden kann. Die Photovoltaikelemente auf der Außenseite 13 des Schutzbleches 9 sind dabei elektrisch mit dem Rücklicht 3 verbunden.

Insgesamt betrachtet sind mit dem erfindungsgemäßen Rücklicht 3 und/oder Reflektor 3 für ein Fahrrad 1 oder E-Bike 1 oder E-Scooter, dem erfindungsgemäßen Diebstahlwarnsystem 34, dem erfindungsgemäßen Fahrrad 1 oder E-Bike 1 oder E-Scooter und dem erfindungsgemäßen Verfahren zur Diebstahlüberwachung eines Fahrrades oder E-Bikes oder E-Scooter wesentliche Vorteile verbunden. Das Diebstahlwarnsystem 34 kann unter dem Schutzblech 8 sowohl bei Fahrrädern 1 als auch E-Bikes 1 jeglichen Typs, auch nachträglich, eingebaut werden. Die in das Rücklicht 3 integrierte Antenne 24 ermöglicht das Senden und Empfangen von Funksignalen ohne Abschirmung durch das Schutzblech 9 ohne dass eine gesonderte Antenne 24 als weiteres Bauteil notwendig wären. Der Diebstahl kann auch nur mit der Auswertung der Daten zur Position mit Künstlicher Intelligenz erfasst werden.

## Patentansprüche

1. Rücklicht (3) und/oder Reflektor (4) für ein Fahrrad (1) oder E-Bike (1) oder E-Scooter, umfassend
- ein Gehäuse (21),
- eine vorderseitige Oberfläche (19),
- eine rückseitige Oberfläche (20),
- wenigstens eine Lichtquelle für die Ausbildung als Rücklicht (3) und/oder wenigstens ein lichtdurchlässig zu der vorderseitigen Oberfläche angeordnete Reflektorelement zur Reflexion des auf die vorderseitige Oberfläche (19) einstrahlenden Lichts für die Ausbildung als Reflektor (4),
**dadurch gekennzeichnet, dass**
das Rücklicht (3) und/oder der Reflektor (4) eine Antenne (24) umfasst.

2. Rücklicht und/oder Reflektor nach Anspruch 1,
**dadurch gekennzeichnet, dass**
die Antenne (24) an der vorderseitigen Oberfläche (19) wenigstens teilweise, insbesondere vollständig, ausgebildet ist, so dass die vorderseitige Oberfläche (19) wenigstens teilweise von der Antenne (24) gebildet ist.

3. Rücklicht und/oder Reflektor nach Anspruch 1 oder 2,
**dadurch gekennzeichnet, dass**
die Antenne (24) in das Rücklicht (3) und/oder den Reflektor (4) integriert ist und die Antenne (24) wenigstens teilweise, insbesondere vollständig, außerhalb der außenseitigen Oberfläche (19, 20) ausgebildet ist.

4. Rücklicht und/oder Reflektor nach einem oder mehreren der vorhergehenden Ansprüche,
**dadurch gekennzeichnet, dass**
das Rücklicht (3) einen elektrische Gegensteckverbinder (26) umfasst, insbesondere der elektrische Gegensteckverbinder (26) an der rückseitigen oder seitlichen Oberfläche des Rücklichts (3) und/oder des Reflektors (4) ausgebildet ist.

5. Rücklicht und/oder Reflektor nach einem oder mehreren der vorhergehenden Ansprüche,
**dadurch gekennzeichnet, dass**
an dem Rücklicht (3) und/oder dem Reflektor (4) wenigstens ein Formschlusselement (27), insbesondere mehrere Formschlusselemente (27), ausgebildet sind zur formschlüssigen und/oder kraftschlüssigen Fixierung des Rücklichts (3) und/oder des Reflektors (4) an einem Schutzblech (9) des Fahrrades (1) oder E-Bikes (1) oder E-Scooter.

6. Diebstahlwarnsystem (34) für ein Fahrrad (1) oder E-Bike (1) oder E-Scooter, umfassend als Komponenten
- eine Batterie (35),
- eine Positionseinheit (36) zur satellitengestützten Bestimmung der Position,
- eine Funkverbindungseinheit (38) zur Übersendung und/oder zum Empfang von Daten mit einer Funkverbindung,
- eine Antenne (24) für die Positionseinheit (36) und/oder die Funkverbindungseinheit (38),
- wenigstens ein Bauteil (10, 11, 12) mit einem Gehäuse (21),
wobei
das wenigstens eine Bauteil (10, 11, 12) des Diebstahlwarnsystems (34) mit dem Gehäuse (21) wenigstens ein Formschlusselement (27), insbesondere mehrere Formschlusselemente (27), umfasst zur formschlüssigen und/oder kraftschlüssigen Fixierung des wenigstens einen Bauteils (10, 11, 12) an einem Schutzblech (9) des Fahrrades (1) oder E-Bikes (1) oder E-Scooters.

7. Diebstahlwarnsystem nach Anspruch 6,
**dadurch gekennzeichnet, dass**
das wenigstens eine Bauteil (10, 11, 12) des Diebstahlwarnsystems (34) mit dem Gehäuse (21) vier, insbesondere im Eckbereich ausgebildete, Formschlusselemente (27) umfasst.

8. Diebstahlwarnsystem nach Anspruch 6 oder 7,
**dadurch gekennzeichnet, dass**
das Diebstahlwarnsystem (27) als Bauteil (10, 11, 12) ein Rücklicht (3) und/oder einen Reflektor (4) umfasst und in das Rücklicht (3) und/oder den Reflektor (4) die Antenne (24) für die Positionseinheit (36) und/oder die Funkverbindungseinheit (38) integriert ist.

9. Diebstahlwarnsystem nach einem oder mehreren der Ansprüche 6 bis 8,
**dadurch gekennzeichnet, dass**
das Diebstahlwarnsystem (34) als Bauteile (10, 11, 12) ein Bauteil (10) umfasst in das die Batterie (35) integriert ist und ein Bauteil (12) umfasst in das die Positionseinheit (36) und/oder die Funkverbindungseinheit (38) integriert sind.

10. Fahrrad (1) oder E-Bike (1) oder E-Scooter, umfassend
- einen Rahmen (5),
- zwei Räder (6),
- wenigstens ein Schutzblech (9) für je ein Rad (7, 8) und das wenigstens eine Schutzblech (9) je eine dem Rad (7, 8) zugewandte Innenseite (14) und dem Rad (7, 8) abgewandte Außenseite (13) aufweist,
- ein Diebstahlwarnsystem (34),
**dadurch gekennzeichnet, dass**
das Diebstahlwarnsystem (34) gemäß einem oder mehreren der Ansprüche 6 bis 9 ausgebildet ist
und/oder
das Rücklicht (3) und/oder der Reflektor (4) gemäß einem oder mehreren der Ansprüche 1 bis 5 ausgebildet ist.

11. Fahrrad oder E-Bike oder E-Scooter nach Anspruch 10,
**dadurch gekennzeichnet, dass**
wenigstens ein Bauteil (10, 11, 12) des Diebstahlwarnsystems (34), insbesondere vollständig, an und/oder im Bereich der Innenseite (14) des wenigstens einen Schutzbleches (9) in radialer Richtung zwischen dem Rad (7, 8) und dem Schutzblech (9) befestigt ist.

12. Fahrrad oder E-Bike oder E-Scooter nach Anspruch 11 oder 12,
**dadurch gekennzeichnet, dass**
an und/oder im Bereich der Innenseite (14) des wenigstens einen Schutzbleches (9) ein erstes und vorzugsweise ein zweites Gegenformschlusselement (16, 17), insbesondere eine Nut (18), ausgebildet ist und an dem ersten und vorzugsweise zweiten Gegenformschlusselement (16, 17) wenigstens ein Bauteil (10, 11, 12) des Diebstahlwarnsystems (34) mit an dem wenigstens einen Bauteil (10, 11, 12) ausgebildeten wenigstens einen Formschlusselement (27), insbesondere mehreren Formschlusselementen (27), formschlüssig und/oder kraftschlüssig, insbesondere mittels einer Rastverbindung und/oder Clipsverbindung, fixiert ist.

13. Fahrrad oder E-Bike oder E-Scooter nach Anspruch 10 oder 12,
**dadurch gekennzeichnet, dass**
in dem Schutzblech (9) eine Aussparung (15) ausgebildet ist und in der Aussparung (15) das Rücklicht (3) und/oder der Reflektor (4) mit integrierter Antenne (24) als ein Bauteil (10, 11, 12) des Diebstahlwarnsystems (34) angeordnet ist.

14. Verfahren zur Diebstahlüberwachung eines Fahrrades (1) oder E-Bikes (1) oder E-Scooter mit einem Diebstahlwarnsystem (34), insbesondere Fahrrad oder E-Bike gemäß einem oder mehreren der Ansprüche 11 bis 14, mit den Schritten:
- Erfassen der Position des Fahrrades (1) oder E-Bikes (1) oder E-Scooters mit einer Positionseinheit (36) zur satellitengestützten Bestimmung der Position,
- Übersenden und/oder Empfang von Daten mit einer Funkverbindung mit einer Funkverbindungseinheit (38),
- Übersenden und/oder Empfang von Daten mit einer Funkverbindung zu einer Kommunikationseinheit, insbesondere einem Smartphone,
wobei,
die Übersendung und/oder der Empfang von Daten mit der Funkverbindung mit der Funkverbindungseinheit (38) mit einer in ein Rücklicht (3) und/oder Reflektor (3) des Fahrrades (1) oder E-Bikes (1) oder E-Scooter integrierten Antenne (24) ausgeführt wird.

15. Verfahren nach Anspruch 14,
**dadurch gekennzeichnet, dass**
mit Künstlicher Intelligenz, insbesondere Machine Learning, aus der Position des Fahrrades (1) oder E-Bikes (1) oder E-Scooters und vorzugsweise der Position der Kommunikationseinheit in Abhängigkeit von der Zeit ein Modell für die Erfassung eines Diebstahles des Fahrrades (1) oder E-Bikes (1) oder des E-Scooters entwickelt wird durch Lernen und/oder Analyse der Daten zur Position des Fahrrades (1) oder E-Bikes (1) oder E-Scooters und vorzugsweise der Position der Kommunikationseinheit in Abhängigkeit von der Zeit und somit ein Diebstahl des Fahrrades (1) oder E-Bikes (1) oder des E-Scooters erfasst wird.
